# EUROPEAN PATENT SPECIFICATION

(11) **EP 3 483 467 B1**
(45) Date of publication and mention of the grant of the patent: **15.10.2025**
(21) Application number: 18205393.4
(22) Date of filing: 09.11.2018
(51) Int. Cl.: F16F 1/36, G10K 11/162

(54) **FLUID COMPOSITION FOR SYSTEMS DESIGNED TO DAMPEN SOUNDS ASSOCIATED WITH MECHANICAL VIBRATIONS**
FLUIDZUSAMMENSETZUNG FÜR SYSTEME ZUR DÄMPFUNG VON GERÄUSCHEN IM ZUSAMMENHANG MIT MECHANISCHEN SCHWINGUNGEN
COMPOSITION DE FLUIDE POUR DES SYSTÈMES CONÇUS POUR AMORTIR DES SONS ASSOCIÉS À DES VIBRATIONS MÉCANIQUES

(30) Priority: 14.11.2017 IT 201700129968
(43) Date of publication of application: 15.05.2019
(73) Proprietor: Mapei S.p.A., 20158 Milano (IT)
(72) Inventor: SCIALO', Ciro, 20158 Milano (IT)
(74) Representative: Bianchetti & Minoja with Trevisan & Cuonzo IPS SRL

(56) References cited:
- EP-A2- 0 849 495
- WO-A1-2016/113241
- DE-A1- 19 919 664
- GB-A- 2 439 855
- US-A1- 2017 283 332
- US-B1- 7 205 043
- US-B2- 9 139 972

## Description

The present invention relates to a process for the preparation of a binding mass layer for use in sound damping systems designed for the decks of ships or offshore structures.

### Prior art

In structures object to vibrational oscillations, the internal damping of the materials used is very low.

It is important to introduce into the structures additional materials and/or systems designed to effect additional damping, because a significant reduction in the sounds associated with vibrational oscillations improves comfort. Ensuring suitable acoustic comfort is a problem that is particularly felt in the shipbuilding industry, especially in the construction of cruise ships and offshore platforms. It is important to identify the sources of nuisance in order to characterise suitable damping systems.

The introduction of damping systems into a structure allows a considerable amount of energy to be dissipated, mainly by means of two reduction mechanisms:
- decoupling the vibrating surface from the rest of the structures;
- energy dissipation: use of viscoelastic materials able to dissipate a large amount of energy by converting the mechanical vibrational energy to heat energy.

The characterisation of sound transmission through a rigid structure is essentially based on three adjustable parameters:
- mass
- rigidity
- damping.

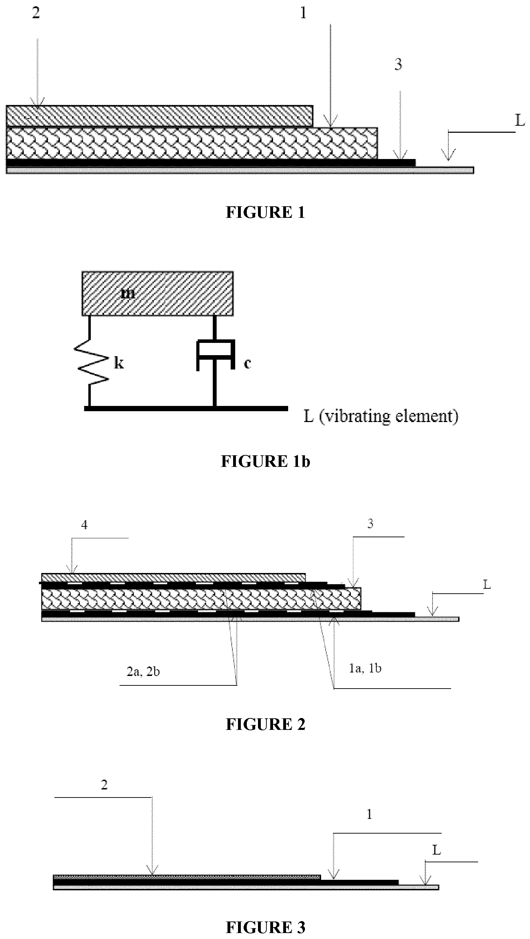

In the shipbuilding industry, the simplest current sound-damping systems, shown in Figure 1, consist of a decoupling layer (1), a thick "mass" layer (2) based on high-density cement, and generally a viscoelastic layer (3).

A mechanical model to which reference can be made, which better interprets the operation of such a system, is the mass (m) - spring (k) - damper (c) model shown in Figure 1b.

The vibrating element transfers the vibrations to the viscoelastic material. The elastic component of the material (represented in the model by spring (k)) transfers said vibrations to mass (m), the binding layer. The vibrations of the mass are partly damped by the viscous component of viscoelastic material (c).

Continual demand for higher performance has led to the design of more complex systems, schematically illustrated in figure 2, consisting of alternating layers of viscoelastic material (3) and "stiffening mass" layers consisting of steel or aluminium patches (4a and 4 b) separated by a decoupling layer (1). Cementitious mass (2) can be overlaid on upper patch (4a).

Metal patches with thicknesses of 1.5 mm or 3.0 mm are affixed using the viscoelastic layer as adhesive with the same application methods as tiles, thus requiring cutting and shaping to fit the shape of the substrate. This operation, which is not always easy, involves the presence of critical factors (sound bridges) due to the inevitable gaps between patches, the possible presence of air pockets between the contact interfaces, and incomplete coverage of the area to be treated due to cutting or shaping difficulties. To prevent air pockets under the metal plates, perforated plates are used. However, although this system promotes elimination of the air trapped under the plates during installation, other gaps are created, together with a reduction in the actual mass applied.

Examples of conventional systems based on the use of metal patches are described in US 8,479,876.

GB 2 439 855 deals with a very different technical problem from the one to which the present invention relates, disclosing an earthquake-resistant system for preventing heavy structures such as statues and tombstones from overturning, said system consisting of an elastic sheet wherein spherical bodies made of metal, ceramic, wood or other materials are embedded. The heavy structure is placed on the elastic sheet, and the spherical bodies have the function of supporting the weight of the structure, while the seismic vibrations are damped by the elastic sheet.

DE 199 19 664 discloses a preformed element for the vehicle industry consisting of an elastic component (resin or bitumen) wherein non-spherical metal particles, for example in the form of chips or the like, are dispersed.

US 2017/283332 A1 discloses a mortar composition and stratified structure designed for the deck of ships.

### DESCRIPTION OF FIGURES

Figure 1 shows a cross-section of a conventional sound- and vibration-damping system comprising a decoupling layer (1), a high-density cementitious "mass" layer (2) and a viscoelastic layer (3) in direct contact with vibrating element (L);
Figure 2 shows a cross-section of a further conventional sound- and vibration-damping system comprising metal patches (2a and 2b) alternating with viscoelastic layers (1a and 1b), the former being applied directly to vibrating element (L) and the latter to decoupling layer (3);
Figure 3 shows a cross-section of a system according to the invention. Viscoelastic layer (1) is placed on vibrating element (L), followed by the binding mass obtained by applying the fluid composition according to the invention (2), consisting of a binding matrix wherein spherical metal aggregates are dispersed.
Figure 4 shows a cross-section of a system according to the invention formed by two layers of binding mass (5a and 5b), with the presence of a decoupling layer (1) and a double viscoelastic layer (3a and 3b).
Figure 5 is a graph of the sound-damping effect obtained according to example 1.
Figure 6 is a graph comparing the sound-damping effects of the two systems schematically illustrated in figures 2 and 4.

### Description of the invention

It has now been found that the drawbacks of the currently known systems can be overcome by using a continuous system, easily applicable and modulatable according to the density and elasticity to be obtained, by replacing the layers consisting of steel or aluminium patches with a fluid composition comprising a binding matrix wherein spherical metal aggregates are dispersed.

Unlike DE 199 19 664, the fluid composition is not a preformed element, and involves the use of metal aggregates which necessarily have a spherical rather than chip shape. Unlike GB 2 439 855, the invention relates to a structure wherein the elastic layer wherein the metal spheres are dispersed is integral with the vibrating element, and does not have the function of supporting a structure that merely rests on said elastic layer.

The binding matrix comprises a cementitious formulation.

The spherical metal aggregates, which typically have a diameter ranging between 0.5 mm and 0.8 mm, are preferably made of ferromagnetic material or stainless steel. Said spherical aggregates, conventionally used in sandblasting processes, i.e. mechanical surface-cleaning treatments, are available on the market as granolithic spheres made of molten or drawn steel and molten or drawn stainless steel.

The cementitious matrix comprises a rapid-setting, rapid-hydration hydraulic binder, with selected aggregates, resins, fibres and special admixtures, able to form a flowable, self-levelling, rapid-drying and rapid-hardening mortar.

The weight ratio of cementitious matrix to microspheres ranges between 1:1 and 1:4.

In a first aspect thereof, the object of the invention is therefore a process for preparation of a binding mass for use in damping and soundproofing systems for vibrating structures, which comprises:
a) the addition of spherical metal aggregates to a binding matrix made of a one-component cementitious resin;
b) spreading of the fluid composition obtained in a) on a viscoelastic layer directly overlaid on the vibrating structure or on a decoupling layer overlaid on said viscoelastic surface;
c) an optional further sprinkling of microspheres on the layer obtained in b).

The viscoelastic layer on which composition a) is spread can consist of the same material as the binding matrix.

In the case of particularly stringent vibration-damping and soundproofing requirements, multiple layers of the fluid composition according to the invention can be spread on the same number of viscoelastic layers, optionally separated from one another by layers of decoupling material commonly consisting of rock wool panels, generally with a thickness ranging from 20 mm to 50 mm, with high density (140 kg/m³ - 150 kg/m³).

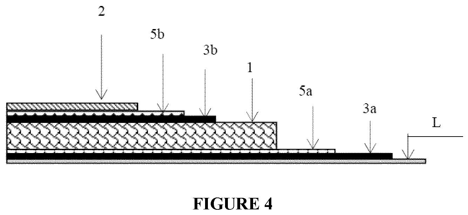

An example of a multi-layer system is shown in Figure 4, wherein reference number (3a) indicates a first viscoelastic layer overlaid on the vibrating element (L) and whereon are placed a binding mass layer obtained by applying the fluid composition according to the invention (5a), a decoupling layer (1), a viscoelastic layer (3b), a second binding mass layer obtained by applying the fluid composition according to the invention (5b), and a cementitious mass (2).

Sprinkling c), when performed, is conducted to saturation point, namely until the spherical metal aggregates are no longer embedded in the binding matrix.

The resulting binding mass can be spread with a straight-edged or saw-toothed spatula. By suitably varying the quantity of metal aggregate or the chemical nature of the fluid part, layers with different densities and different rigidities can be obtained. Binding masses can be prepared having weights per surface unit ranging from 4 kg/m² to 30 kg/m², a range of values that covers all requirements, without excessive thicknesses, which always remain below the 7 mm limit. The use of a cementitious or resinous matrix also allows variation in the rigidity of the system, one of the three parameters that influence sound transmission, by making the layer more or less rigid, as required.

A further aspect of the invention consists of a stratified structure for vibration-damping and soundproofing of the decks of ships, schematically illustrated as vibrating element (L), said structure comprising a first binding mass layer (5a) applied to said vibrating element (L) with the insertion of a viscoelastic layer (3a), at least one second binding mass layer (5b) on viscoelastic layer (3b) separated from the first layer by a decoupling layer (1), and an outer layer of cementitious mass (2), wherein said binding mass layers (3a, 3b) comprise a binding matrix wherein spherical metal aggregates are dispersed.

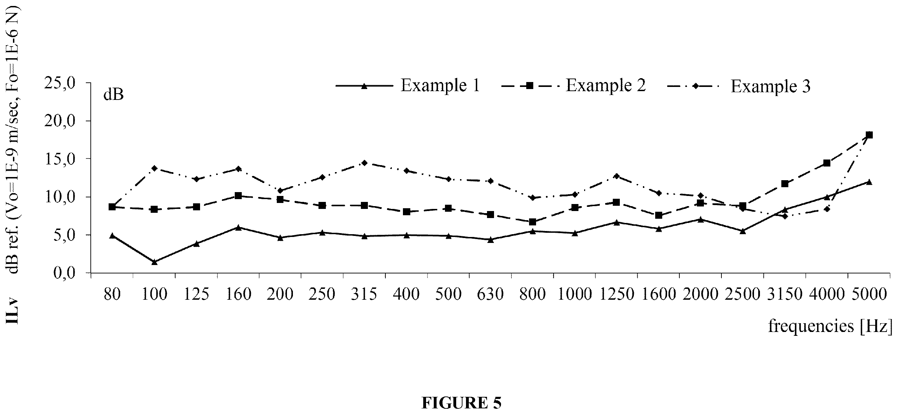

Figure 5 shows and confirms that the rigidity of the system is an important parameter for damping sounds from vibrating sources. In fact, by modifying the polyurethane, epoxy or cementitious binding matrix, the rigidity increases, improving the performance of the system. If a binding matrix must be used for reasons strictly associated with the flexural movements of the structure, a polyurethane binding matrix can be used, adjusting the thickness proportionally to obtain the desired degree of damping.

The structure and process according to the invention produce vibration-damping values comparable to those obtainable with the use of steel or aluminium plates.

The advantages of the invention compared with the use of steel or aluminium plates comprise a significant simplification of the application method and the flexibility of the system, which can be modified on the basis of the final density of the product and its elasticity, and lower costs of materials and their application.

The following examples illustrate the invention in more detail.

### Table 2

### EXAMPLE 1 - Binding mass with cementitious matrix

a) A 2.0 mm layer of a commercially available two-component (polyol; isocyanate) polyurethane resin with the addition of plasticisers, aluminium hydroxide, ammonium polyphosphate, flame retardants and admixtures **(*Mapedeck Viscoelastic 100*** manufactured by Mapei spa), having a density of 1.30 kg/l, was deposited on a 6.0 mm steel patch. The quantity applied per unit area was 2.6 kg/m².
b) A quantity of metal aggregate having a diameter ranging between 0.5 mm and 0.8 mm was mixed into a commercially available one-component cementitious formulation ***(Ultraplan Marine Fire*** manufactured by Mapei spa) having a density of 1.85 kg/l. The resulting mortar was applied to the layer described in paragraph a). The total quantity of microspheres applied was 10.3 kg/m², with a resin/metal aggregate weight ratio of 1/3. The final thickness of the layer was 3.1 mm.

Table 3 summarises the stratification and physical characteristics of the system applied to the steel patch.

The results of the damping effect are illustrated in the graph in Figure 5, which shows the **ILv** (Insertion Loss) values expressed in decibels at various frequencies. **ILv** indicates the difference between the transmission rate of the bare patch and the rate of the steel patch assembly with the damping system applied to it. In other words, **ILv** describes the reduction in transmission rate, at various frequencies, measured on the surface of the final layer of the system described in Example 1.

**Table 3**

| **Layers** | | **Thickness** | **Density** | **Quantity applied per unit area** |
|---|---|---|---|---|
| **1st** | ***Mapedeck Viscoelastic 100*** | 2.0 mm | 1.30 kg/l | 2.6 kg/m² |
| **2nd** | ***Ultraplan Marine Fire*** with spherical metal aggregates | 3.1mm | 4.4 kg/l | 13.64 kg/m² |
| **Total** | | **5.0 mm** | | **15.84 kg/m²** |

Table 1 summarises the stratification and physical characteristics of the system applied to the steel patch.

The results of the damping effect are illustrated in the graph in Figure 5, which shows the **ILv** (Insertion Loss) values expressed in decibels at various frequencies. **ILv** indicates the difference between the transmission rate of the bare patch and the rate of the steel patch assembly with the damping system applied to it. In other words, **ILv** describes the reduction in transmission rate, at various frequencies, measured on the surface of the final layer of the system described in Example 1.

**Table 1**

| **Layers** | | **Thickness** | **Density** | **Quantity applied per unit area** |
|---|---|---|---|---|
| **1st** | ***Mapedeck Viscoelastic 100*** | 1.6 mm | 1.30 kg/l | 2.0 kg/m² |
| **2nd** | ***Mapedeck Viscoelastic 100 with* spherical *metal aggregates*** | 2.5 | | 14.2 kg/m² |
| **Total** | | **4.1mm** | | **16.20** kg/m² |

### EXAMPLE 2 - Binding mass with epoxy matrix

a) A 1.6 mm layer of a commercially available two-component (polyol; isocyanate) polyurethane resin with the addition of plasticisers, aluminium hydroxide, ammonium polyphosphate, flame retardants and admixtures ***(Mapedeck Viscoelastic 100*** manufactured by Mapei spa), having a density of 1.30 kg/l, was deposited on a 6.0 mm steel patch. The quantity applied per unit area was 2.0 kg/m².
b) A quantity of metal aggregate with a diameter ranging between 0.5 mm and 0.8 mm, amounting to 5% by weight, was mixed into a commercially available two-component (epoxy resin, amine hardener) epoxy formulation with aluminium hydroxide, ammonium polyphosphate and admixtures **(*Mapedeck Epofloor*** manufactured by Mapei spa), having a density of 1.65 kg/l. Said mixture was applied to the layer described in paragraph a). The product was sprinkled, while still fresh, with new metal aggregate, to the point of saturation. The total quantity of microspheres applied (mixed part + sprinkled part) was 10.97 kg/m², with a resin/metal aggregate weight ratio of 1/4. The final thickness of the layer was 2.5 mm.

Table 2 summarises the stratification and physical characteristics of the system applied to the steel patch.

The results of the damping effect are illustrated in the graph in Figure 5, which shows the **ILv** (Insertion Loss) values expressed in decibels at various frequencies. **ILv** indicates the difference between the transmission rate of the bare patch and the rate of the steel patch assembly with the damping system applied to it. In other words, **ILv** describes the reduction in transmission rate, at various frequencies, measured on the surface of the final layer of the system described in Example 2.

**Table 2**

| **Layers** | | **Thickness** | **Density** | **Quantity applied per unit area** |
|---|---|---|---|---|
| **1st** | ***Mapedeck Viscoelastic 100*** | 1.6 mm | 1.30 kg/l | 2.0 kg/m² |
| **2nd** | ***Mapedeck Epofloor*** with spherical metal aggregates | 2.5 mm | | 13.50 kg/m² |
| **Total** | | **4.1 mm** | | **15.50 kg/m** |

### EXAMPLE 3 - Binding mass with cementitious matrix

a) A 2.0 mm layer of a commercially available two-component (polyol; isocyanate) polyurethane resin with the addition of plasticisers, aluminium hydroxide, ammonium polyphosphate, flame retardants and admixtures **(*Mapedeck Viscoelastic 100*** manufactured by Mapei spa), having a density of 1.30 kg/l, was deposited on a 6.0 mm steel patch. The quantity applied per unit area was 2.6 kg/m².
b) A quantity of metal aggregate having a diameter ranging between 0.5 mm and 0.8 mm was mixed into a commercially available one-component cementitious formulation ***(Ultraplan Marine Fire*** manufactured by Mapei spa) having a density of 1.85 kg/l. The resulting mortar was applied to the layer described in paragraph a). The total quantity of microspheres applied was 10.3 kg/m², with a resin/metal aggregate weight ratio of 1/3. The final thickness of the layer was 3.1 mm.

Table 3 summarises the stratification and physical characteristics of the system applied to the steel patch.

The results of the damping effect are illustrated in the graph in Figure 5, which shows the **ILv** (Insertion Loss) values expressed in decibels at various frequencies. **ILv** indicates the difference between the transmission rate of the bare patch and the rate of the steel patch assembly with the damping system applied to it. In other words, **ILv** describes the reduction in transmission rate, at various frequencies, measured on the surface of the final layer of the system described in Example 3.

**Table 3**

| **Layers** | | **Thickness** | **Density** | **Quantity applied per unit area** |
|---|---|---|---|---|
| **1st** | ***Mapedeck Viscoelastic 100*** | 2.0 mm | 1.30 kg/l | 2.6 kg/m² |
| **2nd** | ***Ultraplan Marine Fire*** with spherical metal aggregates | 3.1mm | 4.4 kg/l | 13.64 kg/m² |
| **Total** | | **5.0 mm** | | **15.84 kg/m²** |

### EXAMPLE 4 - Comparison of systems:

A) multi-layer damping system with steel plates (Fig. 2)
B) multi-layer damping system according to the invention (Fig. 4)

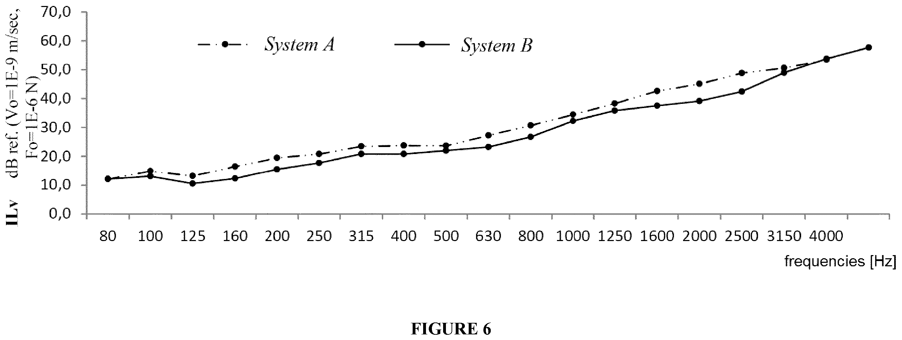

Figure 6 compares the vibration-damping performance of a conventional multi-layer system with metal plates, schematically illustrated in Figure 2 **(system A),** wherein layers (1a, 1b), with a thickness of 2.0 mm, consist of a two-component polyurethane resin **(*Mapedeck Viscoelastic 100*),** layers (2a and 2b) are made from steel plates with a thickness of 1.5 mm, layer (3) is the decoupling layer with a thickness of 50 mm, consisting of rock wool panels with a density of 140 kg/m³ **(*Mapesilent Marine 140*)*,*** and layer (4) is an ***Ultraplan Marine Fire*** cementitious mass with a thickness of 5 mm.

The multi-layer system according to the invention is schematically illustrated in Figure 4 **(system B),** wherein layer (2) is a cementitious mass ***Ultraplan Marine Fire*** with a thickness of 5 mm, layers (5), with a thickness of 3.5 mm, consist of the epoxy composition mixed with the steel microspheres described in example 2, layers (3a and 3b), with a thickness of 2.0 mm, consist of a two-component polyurethane resin **(*Mapedeck Viscoelastic 100*)*,*** and decoupling layer (1), with a thickness of 50 mm, consists of rock wool panels with a density of 140 kg/m³ **(*Mapesilent Marine 140*)*.***

## Claims

1. A process for the preparation of a binding mass layer for use in sound damping systems designed for the decks of ships or offshore structures, which comprises:
a) the addition of spherical metal particles to a cement-based resin;
b) spreading of the composition obtained in a) on a viscoelastic layer directly overlaid on the vibrating structure or on a decoupling layer overlaid on said viscoelastic layer;
c) an optional further sprinkling of spherical metal particles on the layer obtained in b).

2. Stratified structure for vibration-damping and soundproofing of the decks of ships as a vibrating element (L), said structure comprising a first binding mass layer (5a) applied to said vibrating element (L) with the insertion of a viscoelastic layer (3a), at least one second binding mass layer (5b) on viscoelastic layer (3b) separated from the first layer by a decoupling layer (1), and an outer layer of cementitious mass (2), wherein said binding mass layers (5a, 5b) comprise a binding matrix comprising a cement-based resin wherein spherical metal aggregates are dispersed.

## Patentansprüche

1. Verfahren zur Herstellung einer bindenden Masseschicht zur Verwendung in schalldämpfenden Systemen, die für die Decks von Schiffen oder Offshore-Strukturen ausgelegt sind, welches umfasst:
a) die Zugabe von kugelförmigen Metallteilchen zu einem zementbasierten Harz;
b) Auftragen der unter a) erhaltenen Zusammensetzung auf eine viskoelastische Schicht, die direkt auf die vibrierende Struktur aufgetragen ist, oder auf eine Entkopplungsschicht, die auf die viskoelastische Schicht aufgetragen ist;
c) ein optionales weiteres Streuen von kugelförmigen Metallteilchen auf die in b) erhaltene Schicht.

2. Schichtstruktur zur Vibrationsdämpfung und Schalldämmung von Decks von Schiffen als ein vibrierendes Element (L),
wobei die Struktur eine erste bindende Masseschicht (5a), die auf dem vibrierenden Element (L) mit dem Einfügen einer viskoelastischen Schicht (3a) aufgebracht ist, mindestens eine zweite bindende Masseschicht (5b) auf der viskoelastischen Schicht (3b), die von der ersten Schicht durch eine Entkopplungsschicht (1) getrennt ist, und eine äußere Schicht aus zementartiger Masse (2) umfasst, wobei die bindenden Masseschichten (5a, 5b) ein bindendes Mittel umfassen, das ein zementbasiertes Harz umfasst, in dem kugelförmige Metallzuschlagstoffe dispergiert sind.

## Revendications

1. Procédé pour la préparation d'une couche de masse de liaison pour une utilisation dans des systèmes d'amortissement du son conçus pour les ponts de navires ou de structures offshores, lequel procédé comprend :
a) l'ajout de particules métalliques sphériques à une résine à base de ciment ;
b) l'étalement de la composition obtenue en a) sur une couche viscoélastique directement superposée sur la structure vibrante ou sur une couche de découplage superposée sur ladite couche viscoélastique ; et
c) une pulvérisation optionnelle de particules métalliques sphériques sur la couche obtenue en b).

2. Structure stratifiée pour amortir les vibrations et assurer l'isolation phonique des ponts de navires en tant qu'élément vibrant (L), ladite structure comprenant une première couche de masse de liaison (5a) appliquée sur ledit élément vibrant (L) moyennant l'insertion d'une couche viscoélastique (3a), au moins une seconde couche de masse de liaison (5b) sur une couche viscoélastique (3b) séparée de la première couche par une couche de découplage (1), et une couche externe de masse cimentaire (2), dans laquelle lesdites couches de masse de liaison (5a, 5b) comprennent une matrice de liaison comprenant une résine à base de ciment à l'intérieur de laquelle des agrégats métalliques sphériques sont dispersés.
